# EUROPEAN PATENT SPECIFICATION

(11) **EP 1 298 833 B1**
(45) Date of publication and mention of the grant of the patent: **18.04.2007**
(21) Application number: 02292310.6
(22) Date of filing: 20.09.2002
(51) Int. Cl.: H04L 7/10, H04L 25/14, H04B 10/00, H04L 1/12, H04L 12/56, H04Q 11/00

(54) **Method of synchronizing parallel optical links between communications components.**
Verfahren zur Synchronisierung parallel optischer Verbindungen zwischen Kommunkationskomponenten
Procédé de synchronisation de liaisons optiques parallèles entre des componsants de communications

(30) Priority: 12.12.2001 US 12436; 27.09.2001 CA 357932
(43) Date of publication of application: 02.04.2003
(73) Proprietor: Alcatel Canada Inc., Kanata, Ontario K2K 2E6 (CA)
(72) Inventor: Schaller, William, Stittsville, Ontario K2S 1X5 (CA); Nagy, Derrick, Nepean, Ontario K2J 3J2 (CA); Campbell, Brian, Ottawa, Ontario K1H 6M8 (CA)
(74) Representative: Lenne, Laurence

(56) References cited:
- EP-A- 0 323 000
- EP-A- 0 727 892
- WO-A-00/70827
- WO-A-97/02687
- US-A- 5 629 983

## Description

The invention relates to a method of synchronizing parallel optical links between communications components, such as components of a routing switch platform.

Many switch or router products utilize multiple data interconnection cables or fiber links typically called high-speed inter-shelf links (HISLs). Such HISLs may provide gigabit and terabit bandwidth capacities between various components within a communications device. For example, on a routing switch platform, a HISL may be used to link an interface card or a line card circuit to a switch fabric.

In the interest of link throughput, these HISLs may employ parallel optical interfaces (PAROLI) and may not use framing overhead. Such framing is generally required for link synchronization using conventional methods. Additionally, since PAROLI interfaces comprise a plurality of parallel lines, these lines as well as corresponding circuits and buffers at either end require proper synchronization with respect to each other.

The link synchronization methods presently available either rely on framing, or may not provide satisfactory HISL link alignment of data segments carried on the PAROLI link. Also, known prior art solutions do not prevent cells from being sent through the HISL before it is fully synchronized, resulting in faulty performance.

Thus, there is a need for a method of synchronizing PAROLI links between components of a communications device which is more reliable and robust than methods available in the prior art.

WO 0070827 discloses an Ethernet architecture that enables the transfer of data by striping individual frames across a plurality of logical channels, thus allowing operation at substantially the sum of the individual channel rates. A distributor within a sending entity's network interface distributes frame bytes in a round-robin fashion on the plurality of channels. Each mini-frame is separately framed and encoded for transmission across its channel. A receiving entity's network interface includes a collector for collecting multiple mini-frames and reconstructing the frame's byte stream. The first and last bytes of each frame and mini-frame are marked for ease of recognition. Multiple unique idle symbols may be employed for transmission during inter-frame gaps to facilitate the collector's synchronization of the multiple channels and/or enhance error detection. A maximum channel skew is specified, and each channel may be buffered with elasticity proportional to the maximum skew so that propagation delay may be encountered between channels without disrupting communications.

EP 0727892 discloses a testing method. To test the processing of a data frame processing unit (FPU) which, in a normal working mode, processes input data frames applied to a data frame input (FI) thereof, the data frame processing unit (FPU) is brought in a test mode. Therefore, an active test signal is applied to a test mode control input (TCI) of this data frame processing unit (FPU). When brought in the test mode, the frame counters of the data frame processing unit (FPU) have lower limits and test data frames with smaller dimensions than the input data frames are applied to the data frame input (F1).

EP 0323000 discloses an optical backplane for use in a switching system or computer for interconnecting a plurality of associated circuit modules. The backplane comprises a switch which is interconnected to each of the associated circuit modules by a separate multifiber ribbon, each ribbon including a plurality of transmit and receive optical fibers, and an optical fiber for providing concurrent synchronization signals to each of the associated circuit modules. The switch includes a switching block for coupling parallel optical signals received from the plurality of receive optical fibers in any multifiber ribbon, transmitted by a sending module, to the transmit fibers of each of the multifiber ribbons for transmission to all of the modules associated with the optical backplane. The switch also includes a timing generation block which generates an optical timing signal that is simultaneously distributed to the separate optical fibers in each of the multifiber ribbons in order to concurrently synchronize all of the associated modules. Each of the associated modules is connected to the backplane via the separate associated optical multifiber ribbon, and includes an interface logic block for interfacing an associated user circuit to the optical backplane, and a means for permitting the module to contend for access to the optical backplane.

US 5629983 discloses a coding part of a transmitter side codes N series of input data into N+1 series of transmission data so that each of N+1 series of transmission data have frames and have the same transmission rates as those of the input data. For example, a bit transfer unit comprised in the coding part moves i-th bits of series i to the additional series N+1 where i=1 to N and a complement bit insertion unit inserts complements of an (N+1)-th bit of series 1 and (j-1)-th bits of series j into a first bit position of series 1 and j-th bit positions of series j, respectively, wherein J=2 to N. A frame signal insertion unit alternates frame signal into the series N+1. BSI is secured by this simple construction.

.2 D5 (WO9702687) discloses a system and method for regulating cell transfer timing and for re-establishing resynchronization in a packet switched telecommunications system. One or more marker cells, called Empty Cell Position (ECP) patterns, are placed between and amongst a sequence of data cells. Each ECP pattern comprises a bit sequence that is readily distinguishable from a data cell but having the ability to substitute for a standard data cell in an outgoing transmission time slot. The data cells and ECP patterns are placed in an elastic buffer such as a FIFO to permit cell generation to be made relatively independent of cell transmission. This method and system additionally permits a cell transmitter to re-establish synchronization every time it detects an ECP pattern. A cell generator places data cells and ECP patterns in a buffer. A cell transmitter retrieves the data cells and ECP patterns from the buffer and transmits the data cells after a time delay that depends on the number and contents of the ECP patterns immediately preceding that data cell.

In an aspect of the invention, there is provided a method of synchronizing unframed data flow through parallel optical links between first and second communications components, each said first and second communications components including an optical laser for transmitting laser signals to the other through said optical links, and each said first and second communications components including optical sensors for receiving said transmitted laser signals, the method comprising the steps of:
(a) initializing each of said first and second communications components;
(b) enabling said optical lasers and optical sensors and exchanging idle packets between said first and second communications components to establish a datapath across said optical links;
(c) exchanging test data packets across said datapath established in step (b) to verify connection of all of said optical links; and
(d) upon verification of connection of said optical links in step (c), enabling data flow between said first and second communications components;
whereby, said optical links are synchronized, said datapath is established, and said test data transmission is verified before said data flow is allowed between said first and second communications components.

In an embodiment, step (a) of the method comprises:
(i) flushing FIFO performed by a device reset and input queues of said first and second communications components;
(ii) enable said optical lasers and said optical sensors; and
(iii) latching serial-deserializer circuits operatively connected to said optical links.

In another embodiment, step (b) of the method comprises:
(iv) enabling said optical laser in said first communications device and transmitting laser signals comprising idle packets to said second communications device;
(v) enabling said optical sensor in said first communications device;
(vi) enabling said optical sensor in said second communications device;
(vii) detecting idle packets in said second communications device;
(viii) flushing any queues in said second communications device and detecting said idle packets received from said first communications device;
(ix) upon detection of said idle packets from said first communications device in step (vii), enabling said optical laser in said second communications device and transmitting laser signals comprising return idle packets to said first communications device; and
(x) detecting said return idle packets from said second communications device using said optical sensor in said first communications device.

In another embodiment, step (c) of the method comprises:
(xi) generating test data packets in said first communications device and transmitting said test data packets across said datapath to said second communications device;
(xii) receiving and enqueuing said test data packets in said second communications device;
(xiii) testing said dequeued test data packets to verify that they are properly encoded;
(xiv) upon receiving properly encoded test data packets from said first communications device in step (xiii), generating return test data packets and transmitting said return test data packets across said datapath to said first communications device; and
(xv) receiving and enqueuing said return test data packets generated in step (xiii) in said first communications device;
(xvi) testing said dequeued return test data packets to verify that they are properly encoded; and
(xvii) upon receiving properly encoded return test data packets, verifying the connection of said optical links.

In a second aspect, the present invention provides a method of resynchronizing unframed data flow through parallel optical links between first and second communications components upon an occurrence of a communications error therebetween, each said first and second communications components including an optical laser for transmitting laser signals to the other through said optical links, and each said first and second communications components including optical sensors for receiving said transmitted laser signals, the method comprising the steps of:
(a) detecting a communications error;
(b) upon detection of said communications error in step (a) initializing each of said first and second communications components;
(c) enabling said optical lasers and optical sensors and exchanging idle packets between said first and second communications components to establish a datapath across said optical links;
(d) exchanging test data packets across said data path established in step (c) to verify connection of all of said optical links; and
(e) upon verification of connection of said optical links in step (d), enabling data flow between said first and second communications components;
whereby, said optical links are synchronized, said datapath is established, and said test data transmission is verified before said data flow is allowed between said first and second communications components.

In an embodiment, step (b) of the second aspect comprises:
(i) flushing FIFO performed by a device reset and input queues of said first and second communications components;
(ii) enabling said optical lasers and said optical sensors; and
(iii) latching serial-deserializer circuits operatively connected to said optical links.

In another embodiment, step (c) of the second aspect comprises:
(iv) enabling said optical laser in said first communications device and transmitting laser signals comprising idle packets to said second communications device;
(v) enabling said optical sensor in said first communications device;
(vi) enabling said optical sensor in said second communications device;
(vii) flushing any queues in said second communications device and detecting said idle packets received from said first communications device;
(viii) upon detection of said idle packets from said first communications device in step (vii), enabling said optical laser in said second communications device and transmitting laser signals comprising return idle packets to said first communications device; and
(ix) detecting said return idle packets from said second communications device using said optical sensor in said first communications device.

In another embodiment, step (d) of the second aspect comprises:
(x) generating test data packets in said first communications device and transmitting said test data packets across said datapath to said second communications device;
(xi) receiving and enqueuing said test data packets in said second communications device; (xii) testing said dequeued test data packets to verify that they are properly encoded;
(xiii) upon receiving properly encoded test data packets from said first communications device in step (xii), generating return test data packets and transmitting said return test data packets across said datapath to said first communications device; and
(xiv) receiving and enqueuing said return test data packets generated in step (xiii) in said first communications device;
(xv) testing said dequeued return test data packets to verify that they are properly encoded; and
(xvi) upon receiving properly encoded return test data packets, verifying the connection of said optical links.

In a third aspect, the present invention provides a method of synchronizing data flow through parallel optical links between a fabric interface card and a switch access card, each said fabric interface card and said switch access card including an optical laser for transmitting laser signals to the other through said optical links, and each said fabric interface card and said switch access card including optical sensors for receiving said transmitted laser signals, the method comprising the steps of:
(a) initializing each of said fabric interface card and said switch access card;
(b) enabling said optical lasers and optical sensors and exchanging idle packets between said fabric interface card and said switch access card to establish a datapath across said optical links;
(c) exchanging test data packets across said datapath established in step (b) to verify connection of all of said optical links; and
(d) upon verification of connection of said optical links in step (c), enabling data flow between said fabric interface card and said switch access card;
whereby, said optical links are synchronized, a datapath is established, and test data transmission is verified before data flow is allowed between said fabric interface card and said switch access card.

In an embodiment, step (a) of the third aspect comprises:
(i) flushing FIFO performed by a device reset and input queues;
(ii) enabling said optical lasers and said optical sensors; and
(iii) latching serial-deserializer circuits operatively connected to said optical links.

In another embodiment, step (b) of the third aspect comprises:
(iv) enabling said optical laser in said fabric interface card and transmitting laser signals comprising idle packets to said switch access card;
(v) enabling said optical sensor in said fabric interface card;
(vi) enabling said optical sensor in said switch access card;
(vii) flushing any queues in said switch access card and detecting said idle packets received from said fabric interface card;
(viii) upon detection of said idle packets from said fabric interface card in step (vii), enabling said optical laser in said switch access card and transmitting laser signals comprising return idle packets to said fabric interface card; and
(ix) detecting said return idle packets from said switch access card using said optical sensor in said fabric interface card.

In another embodiment, step (c) of the third aspect comprises:
(x) generating test data packets in said fabric interface card and transmitting said test data packets across said datapath to said switch access card ;
(xi) receiving and enqueuing said test data packets in said switch access card;
(xii) testing said dequeued test data packets to verify that they arc properly encoded;
(xiii) upon receiving properly encoded test data packets from said fabric interface card in step (xii), generating return test data packets and transmitting said return test data packets across said datapath to said fabric interface card; and
(xiv) receiving and enqueuing said return test data packets generated in step (xiii) in said fabric interface card;
(xv) testing said dequeued return test data packets to verify that they are properly encoded; and
(xvi) upon receiving properly encoded return test data packets, verifying the connection of said optical links.

In a fourth aspect, the present invention provides a method of resynchronizing data flow through parallel optical links between a fabric interface card and a switch access card upon an occurrence of a communications error therebetween, each said fabric interface card and said switch access card including an optical laser for transmitting laser signals to the other through said optical links, and each said fabric interface card and said switch access card including optical sensors for receiving said transmitted laser signals, the method comprising the steps of:
(a) detecting a communications error;
(b) upon detection of a communications error in step (a) initializing each of said fabric interface card and said switch access card;
(c) enabling said optical lasers and optical sensors and exchanging idle packets between said fabric interface card and said switch access card to establish a datapath across said optical links;
(d) exchanging test data packets across said datapath established in step (c) to verify connection of all of said optical links; and
(e) upon verification of connection of said optical links in step (d), enabling data flow between said fabric interface card and said switch access card;
whereby, said optical links arc synchronized, said datapath is established, and said test data transmission is verified before said data flow is allowed between said fabric interface card and said switch access card.

In a fifth aspect, the present invention provides a method of synchronizing unframed data flow through a communications link between first and second communications components, each said first and second communications components including a transmitter for transmitting signals to the other through said communications link, and each said first and second communications includes a receiver for receiving said transmitted signals, the method comprising the steps of:
(a) initializing each of said first and second communications components;
(b) enabling said transmitters and said receivers and exchanging idle packets between said first and second communications components to establish a connection across said communications link;
(c) exchanging test data packets across said datapath established in step (b) to verify connection of said communications links; and
(d) upon verification of connection of said communications link in step (c), enabling data flow between said first and second communications components.

In an embodiment of the fifth aspect, said communications link is a parallel optical link, said transmitter is an optical laser, and said receiver is an optical sensor.

In another embodiment of the fifth aspect, the method further comprises the step of completing synchronization of said optical links, establishing said datapath, and verifying said test data transmission before data flow is allowed between said first and second communications components.

In other aspects, the present invention provides various combinations of the above aspects.

The foregoing and other aspects of the invention will become more apparent from the following description of specific embodiments thereof and the accompanying drawings which illustrate, by way of example only, the principles of the invention. In the drawings, where like elements feature like reference numerals (and wherein individual elements bear unique alphabetical suffixes):
- Fig. 1: shows a block diagram of a communications network including a routing switch platform in which a link synchronization method in accordance with an embodiment may be used;
- Fig. 2: shows a block diagram showing high-speed inter-shelf connections between various communications components within the routing switch platform of Fig. 1;
- Fig. 3A: shows a block diagram of link synchronization aspects of the components of Fig. 2;
- Fig. 3B: shows a block diagram showing further details of the interface between the scrial-deserializer of Fig. 3A with other components in the system;
- Fig. 4: shows a flowchart of steps taken on the fabric interface card of Fig. 3, in accordance with an embodiment; and
- Fig. 5: shows a flowchart of steps taken on a switch access card connected to the fabric interface card of Fig. 4 by a link, in accordance with an embodiment.

The description, which follows, and the embodiments described therein, are provided by way of illustration of an example, or examples, of particular embodiments of the principles of the present invention. These examples arc provided for the purposes of explanation, and not limitation, of those principles and of the invention. In the description, which follows, like parts are marked throughout the specification and the drawings with the same respective reference numerals.

The terms as used in this description have the definitions as set out in Table A, below.

**Table A**

| **Term** | **Definition** |
|---|---|
| ASIC | Application Specific Integrated Circuit |
| ATM | Asynchronous Transfer Mode |
| FIC | Fabric Interface Card |
| HISL | High Speed Inter Shelf Link |
| HSC | High Speed Shelf Controller |
| HSPS | High Speed Peripheral Shelf |
| ICON | Inter Shelf Connection |
| IP | Internet Protocol |
| LCS Protocol (PMC Trademark) | The LCS (LineCard to Switch) protocol is a proprietary communications protocol developed by PMC Sierra which runs on an HISL |
| LPC | Line Processing Card |
| PAROLI | Parallel Optical Link/Parallel Optical Interface |
| PS | Peripheral Shelf |
| Rx | Receive |
| SAC | Switch Access Card |
| SCH | Switching Scheduler Card |
| SS SMX | Switching Shelf Switch Matrix |
| SSC | Switching Shelf Controller |
| Tx | Transmit |
| Link | Is a pair of HISL cabled connections between a SAC and FIC. Each cable is a twelve stranded fiber cable. |
| Fiber | A single strand of twelve that makes up a HISL cable. |

The following is a description of a network associated with a routing switch platform on which a method in accordance with an embodiment of the invention may be practiced.

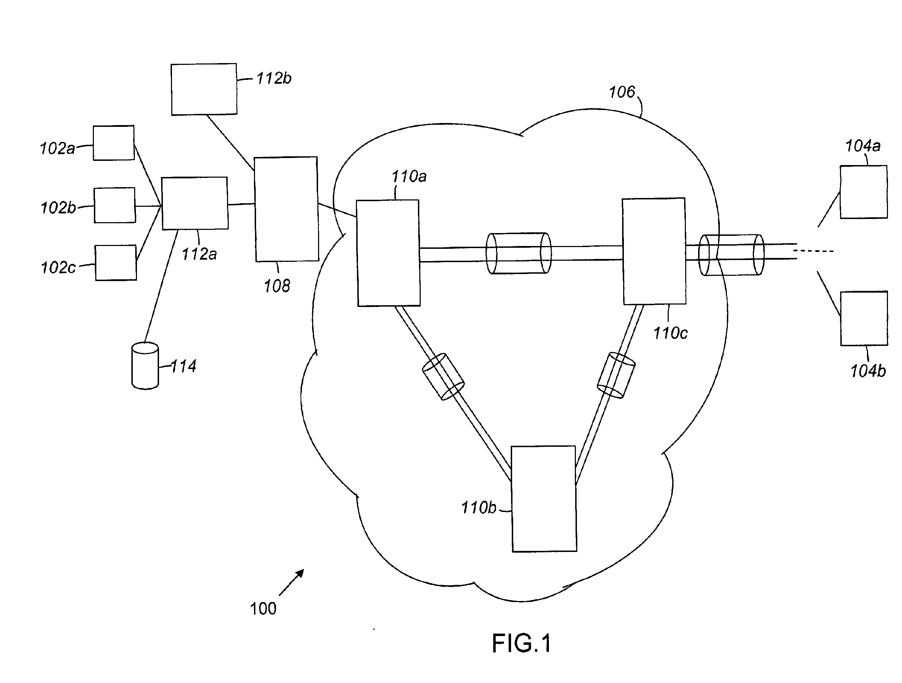

Referring to Fig. 1, a communication network 100 is shown. Network 100 allows devices 102A, 102B, and 102C to communicate with devices 104A and 104B through network cloud 106. At the edge of network cloud 106, routing switch 108 is the connection point for devices 102A, 102B and 102C to network cloud 106. In network cloud 106, a plurality of switches 110A, 110B and 110C are connected forming the communications backbone of network cloud 106. In turn, connections from network cloud 106 to devices 104A and 104B.

It will be appreciated that terms such as "routing switch", "communication switch", "communication device", "switch" and other terms known in the art may be used to describe switch 108. Furthermore, while the embodiment is described for switch 108, it will be appreciated that the system and method described herein may be adapted to any switching system including switches 110A, 110B and 110C.

Switch 108 may be a multi-protocol backbone system which can process, for example, both ATM cells and IP traffic through its same switching fabric. Routing switch 108 may allow scaling of the switching fabric capacity, for example, from 50 Gbps to 450 Gbps in increments of 14.4 Gbps simply by the insertion of additional shelves into the multi-shelf switch system. To enable the exchange of data and status information at such switching fabric capacities, corresponding high-speed links are required between various communications components of the switch 108.

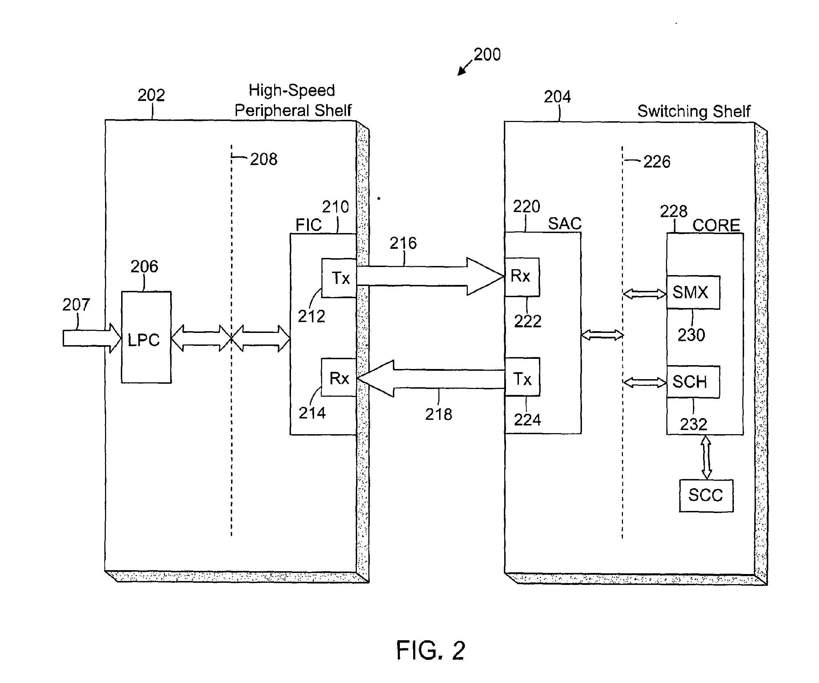

Referring to Fig. 2, the switch 108 may include a switching fabric 200 comprising a peripheral shelf (PS) 202 and a switching shelf (SS) 204. In operation, the switching fabric 200 receives data traffic from devices connected to an ingress port of switch 108 (e.g. 112a of Fig. 1), processes the data traffic through its fabric, then forwards the data traffic to the correct egress port of switch 108.

As shown in Fig. 2, each PS 202 may include a line processing card (LPC) 206 which receives the data traffic from the ingress port 207 of switch 108. The LPC 206 communicates via a mid-plane 208 to a fabric interface card (FIC) 210. The FIC 210 includes a transmit (Tx) optical device 212 and a receive (Rx) optical device 214, which are connected to HISL 216 and HISL 218, respectively. HISLs 216, 218 link the FIC 210 to a switch access card (SAC) 220 in SS 204. More specifically, HISL 216 links Tx optical device 212 to a corresponding Rx optical device 222 in the SAC 220 which represents the ingress direction of packet flow into the switching core. Similarly, HISL 218 links Rx optical device 214 to a corresponding Tx optical device 224 in the SAC 220 which represents the egress direction of packet flow out of the switching core. The SAC 220 in turn communicates via a mid-plane 226 to a switching core 228. Within each core 228, there may be up to six switching matrix cards (SMX) 230. Each SMX card 230 may provide a selectable output stream for data traffic received through its input stream. A set of six SMX cards 230 may constitute a non-blocking 32 x 32 HISL core of the switching fabric 200. Cell switching both to and from the SAC 220 may he present and configured in order to provide an operational switching core 228 for the switching shelf 204. Each switching shelf 204 may contain a switching fabric core 228 and up to 32 SACs 220, each of which may provide, for example, 14.4 Gbps of cell throughput to and from the core 228.

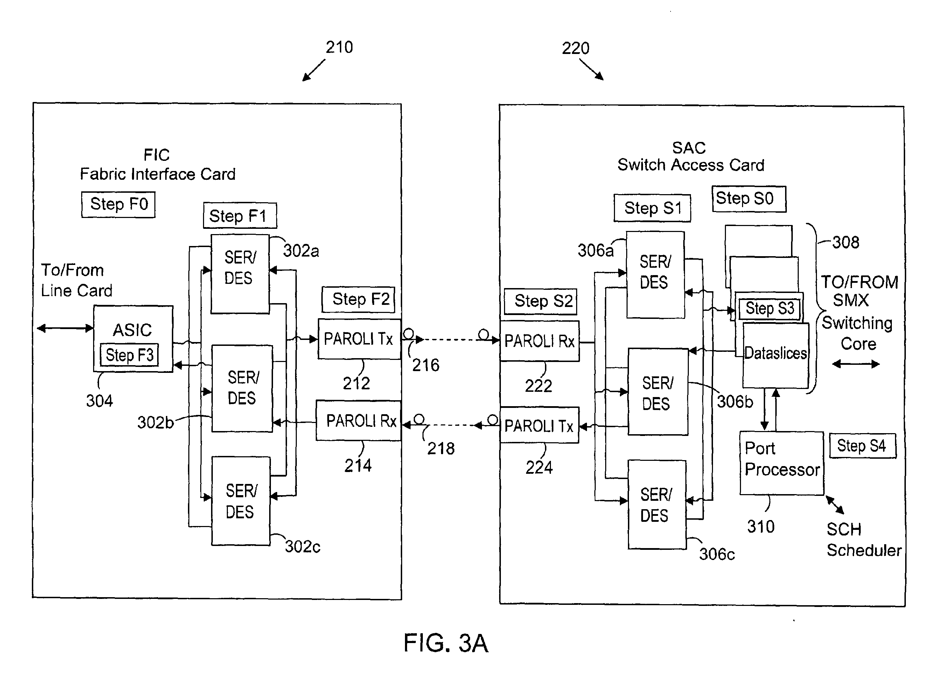

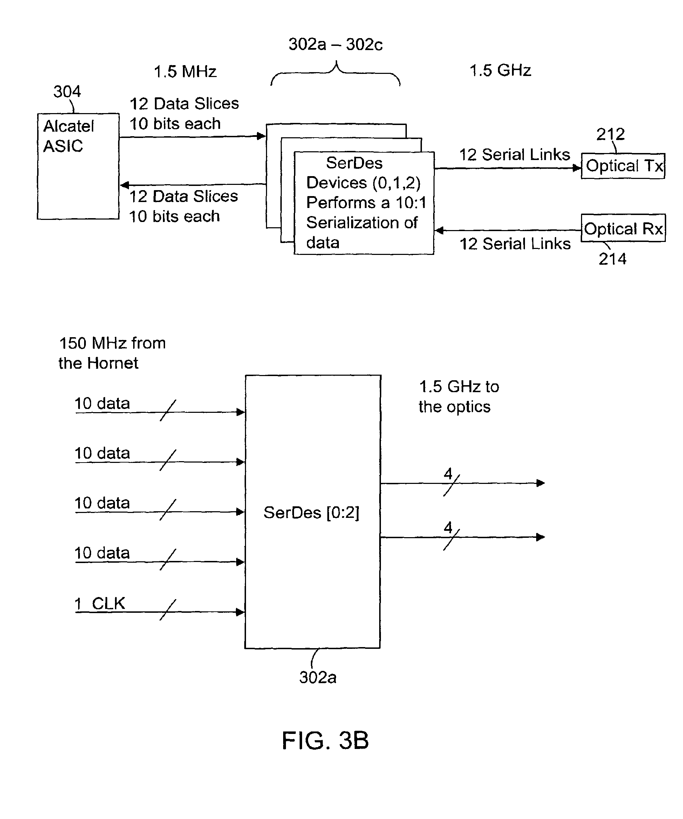

Still referring to Fig. 2, the HISLs 216,218 may each provide, for example, 14.4 Gbps bandwidth. Each HISI, 216, 218 may comprise twelve PAROLIs having a capacity of 1.5 Gbps each. In this case, each HISL 216, 218 would have twelve strands of optical fiber and the SAC 220 would have twelve dataslices (Fig. 3, below) to handle the queuing of cells into the switching core 228. In an embodiment, each cell is segmented amongst the twelve links. For example, 6 bytes (48 bits) are transmitted on each fiber for a total of 72 bytes sent in parallel every 40ns. However, it will be appreciated that the HISL 216, 218 may comprise other than twelve PAROLIs and have different throughput capacities or segmentation of cells.

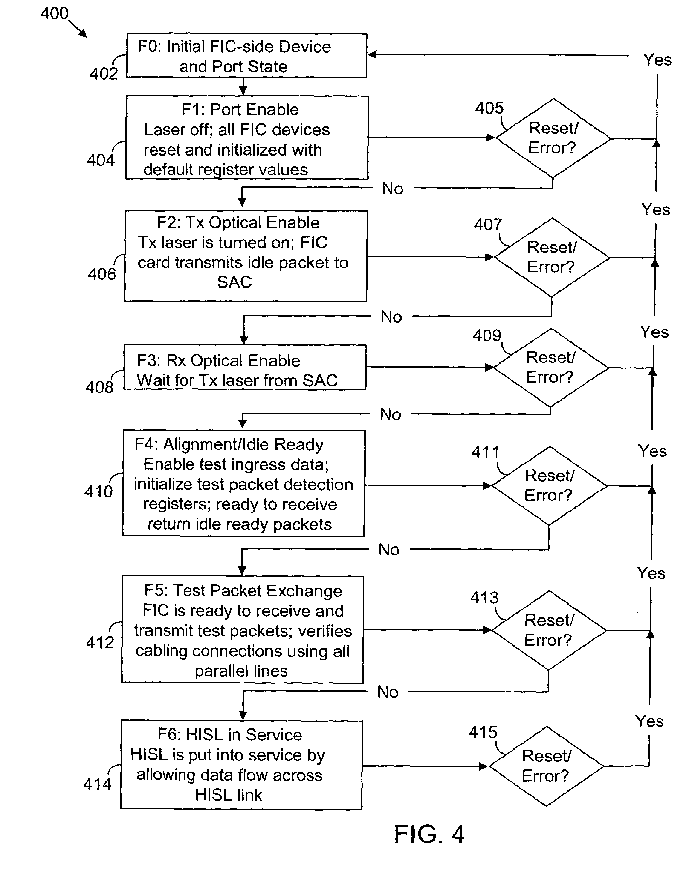

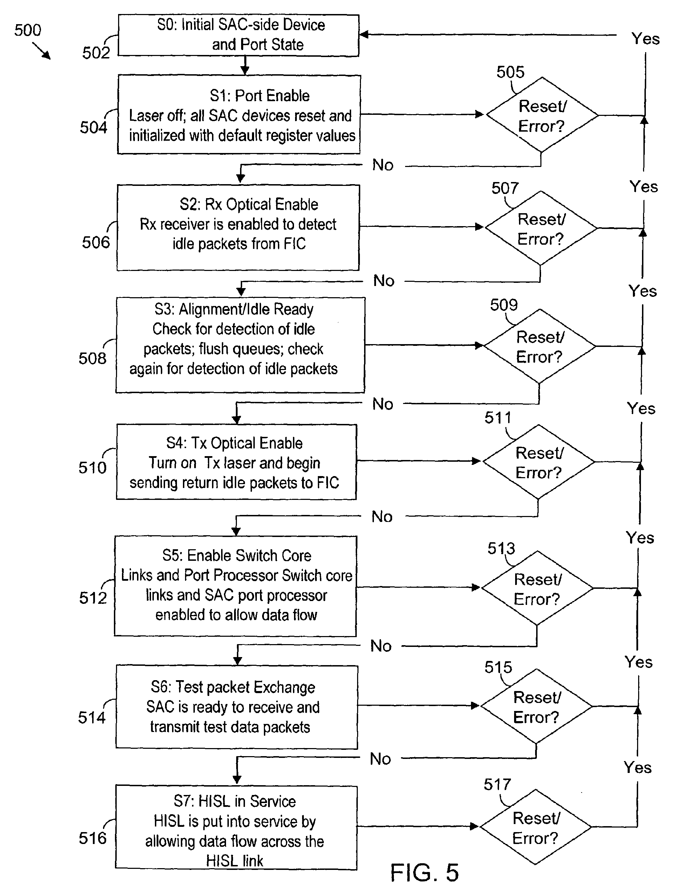

Now referring to Fig. 3A, a block diagram shows further details of the link synchronization components in the FIC 210 and SAC 220. Also shown in Fig. 3A are the relative points of execution of various steps in a synchronization method for both the egress and ingress directions: The FIC process steps are numbered as F0, F1, F2, etc. and the SAC process steps are numbered as S0, S1, S2, etc. These steps provide coordinated synchronization of the HISL. Accordingly, these PIC process steps and SAC process steps may be independent of each other and need not know the state of the other end of the HISL 216, 218. Rather, each process may rely on sensing the current state of their respective devices and circuits to determine whether to move onto the next step. A link synchronization method including these various FIC process steps and SAC process steps is described in detail below, with reference to Fig. 4 and Fig. 5.

In operation, the FIC 210 may provide encoding/decoding of data, supervise queue management of cells to/from the line card/switch fabric, manage backpressure to/from the line card, and handle protocol across the HISLs 216, 218 through a specific device.

The data flow from the FIC 210 to the SAC 220 is as follows. In the FIC 210, the input data stream from a line processing card 206 is received by an application specific integrated circuit (ASIC) 304 which provides encoding/decoding of data, LCS protocol management, cell queue management, CRC detection and generation as well as parity checks. For example, the ASIC 304 may provide eight bit-to ten-bit (8B/10B) encoding/decoding. 8B/10B encoding will take an eight-bit cell and map it to a ten-bit cell to disallow continuous zero or one bit streams. This is necessary due to the optical devices which require periodic transitions to properly detect ones and zeros. As a non-limiting example, a suitable ASIC is Part No. 34-3626-00 manufactured by Alcatel Canada Inc.

The ASIC 304 is connected to a plurality of serial-deserializers (Scr/Des) 302a, 302b, 302c which collectively perform a serialization of the data stream arriving as an input from ASIC 304. The Ser/Des 302a - 302c are connected to a PAROLI Tx optical device 212. In operation, the Tx optical device 212 transmits the serialized data stream through the HISL 216 (comprising a PAROLI with twelve optical fibers operating at 1.5 Gbps, for example) to Rx optical device 222 in the SAC 220.

In Fig. 3B, shown is a more detailed view of the interface between the ASIC 304, the Ser/Des 302a - 302c, the PAROLI Tx 212 and the PAROLI Rx 214 (discussed below). In an embodiment, the ASIC 304 is connected to the SerDes 302a - 302c by links operating at 150 MHz, comprising 12 data slices at 10 bits each. The Ser/Des 302a - 302c perform a 10:1 serialization of the data and have a total of 12 serial links to the PAROLI Tx 212, each running at 1.5 GHz. Similarly, there are a total of 12 serial links from the PAROLI Rx 214 back to the SerDes 302a - 302c, each link running at 1.5 GHz.

Referring back to Fig. 3A, the serialized data received by Rx optical device 222 is deserialized by a plurality of Ser/Des 306a - 306c in the SAC 220. The deserialized data then feeds into a plurality of dataslices 308 which are used to queue and store cells processed by the Ser/Des 306a - 306c. The cells stored in the dataslices 308 may be transferred to the SMX 230 in the switching core 228 (Fig. 2).

As a non-limiting example, a suitable dataslice 308 is Part No. PM9313-HC manufactured by PMC Sierra. This product uses a proprietary LCS (LineCard to Switch) protocol. The SAC 220 may further include a port processor 310 that manages the LCS protocol across the HISLs 216, 218. While a proprietary protocol has been described by way of example, it will be appreciated that other protocols which are capable of operating across PAROLI links may be used.

In the return direction from the SAC 220 to the FIC, the data stream from the SMX 230 in the switching core 228 (Fig. 2) is returned through the dataslices 308 and into the Ser/Des 306a -306c in the SAC 220. The data stream is serialized in the Ser/Des 306a - 306c and the serialized data stream is then fed to the Tx optical device 224 for transmission through HISL 218 back to the FIC 210.

In the FIC 210, Rx optical device 214 receives the data stream from the HISL 218 and feeds it to the Ser/Des 302a -302c in the FIC 220. The Ser/Des then deserializes the data stream and feeds the data stream back to the ASIC 304. The ASIC 304 in turn may pass the data stream to an appropriate output port.

Now referring to Fig. 4, shown is a FIC-side process 400 carried out on the FIC 210 by the ASIC 304 during HISL 216, 218 synchronization with an SAC 220. The corresponding SAC-side process 500 is described further below with reference to Fig. 5.

### F0: Initial FIC-side Device and Port State

Step F0 shown at block 402 is the initial starting point of process 400. If at any point in the method the FIC or port was reset, or if an error was detected during normal operation, then block 402 is the restarting point of process 400, as explained below. From step F0, process 400 proceeds to step F1.

### F1: Device Initialization and Port Enable

In step F1, shown at block 404, the Tx laser 212 is turned off (otherwise the SAC 220 may lock into incorrect timing) and all devices in the FIC 210 are reset and initilized with default register values. After all devices in the FIC 210 are reset, the HISLs 216, 218 are effectively shutdown with the Tx laser 212 turned off and the devices disabled. The initialization in step F 1 removes the devices from reset, initializes encoding/decoding tables, and enables the ingress and egress physical layers. Initialization also "latches" the Ser/Des devices 302a -302c.

Latches are enabled through software writing to the SerDes 302a -302c device registers (not shown). When the device latch register is enabled, it locks the SerDes 302a -302c internal phase lock loop clock to the internal SerDes 302a - 302c transmitter clock. This starts the Rx phase lock loop in the SerDes 302a - 302c. Thereafter, the PAROLI Rx 214 is turned on and the SerDes 302a -302c will receive incoming idle packets, as described further below. The idle packets are detected by the SerDes 302a - 302c in order to properly frame each incoming packet. If this latching step is omitted, then the SerDes 302a - 302c will not be successful in locking onto incoming packets. SerDes latching is performed in this step F1, and in step S1 described further below, where Ser/Des 306a - 306c are similarly latched.

Upon execution of step F1, or in the event of an error or reset instruction during execution of step F1, process 400 proceeds to decision block 405. If there is an error or a reset instruction, process 400 returns to step F0 and the link synchronization process is restarted. Otherwise, process 400 proceeds to step F2. Process 400 is designed to return to step F0 on the event of an error or reset at any point or step in the process. Therefore process 400 may be said to have an automatic restart.

### F2: Tx (Transmit) Optical Enable

In step F2 shown at block 406, the Tx optical laser 212 is turned on. Once the Tx optical laser 212 is on, the FIC 210 begins to transmit idle packets to the SAC 220. It will be appreciated that SAC 220 will be undergoing its own link synchronization process, as described in detail further below, and must have its Rx optical 222 enabled in order to receive the idle packets from the FIC 210. Upon execution of step F2, or in the event of an error or reset instruction during execution of step F2, process 400 proceeds to decision block 407. Block 407 will return process 400 to step F0 if there is an error or a reset instruction. Otherwise, process 400 will proceed to step F3.

### F3: Rx (Receive) Optical Enable

In step F3, shown at block 408, the FIC 210 enables the Rx optical 214 and waits to receive a Tx laser signal from SAC 220. The Rx optical 214 is enabled only after the Tx laser signal has been detected. Waiting to enable the Rx optical 214 until this step helps to prevent any "dark current" problem which may arise from trying to read a signal that is not yet being sent, thus reducing the need for restarting the link synchronization process. Upon execution of step F3, or in the event of an error or reset instruction during execution of step F3, the process 400 proceeds to decision block 409. Block 409 will return the process 400 to step F0 if there is an error or a reset instruction. Otherwise, the process 400 will proceed to step F4.

### F4: Alignment and Idle Packets

In step F4, shown at block 410 when a Rx signal is detected, the FIC 210 ASIC memory, tables and test packet detection registers are initialized. Also, the internal devices of the FIC 210 are placed into operational mode. At this point the devices are waiting for Rx idle packets from the SAC 220 on all twelve fiber segments. The ASIC will begin to align itself to all twelve data segments while receiving idle packets. More specifically, idle packets do not necessarily arrive at precisely the same time on all twelve data segments. The ASIC needs to ensure the data is arriving within a certain time period on all twelve segments for it to be properly aligned. At this point, assuming that the SAC 220 has progressed to a corresponding step, the FIC 210 should be receiving return idle packets from the SAC 220, and be fully aligned to the data stream coming from the SAC 220. Upon execution of step F4, or in the event of an error or reset instruction during execution of step F4, the process 400 will proceed to decision block 411. Block 411 will return process 400 to step F0 if there is an error or a reset instruction. Otherwise, process 400 will proceed to step F5.

### F5: Test Packet Exchange for HISL Verification

In step F5, shown at block 412, the FIC 210 is now ready to transmit test packets to the SAC 220 and to receive return test packets from the SAC 220. Verification through exchange of test packets cannot be performed until step F5 since a proper datapath is established only upon execution of step F4.

In the present embodiment, test packets are cells with a special header that allows them to be detected by hardware upon crossing the HISL 216, 218. The test packets may be written into devices in the FIC 210 and SAC 220 and queued for transmission into the data stream to each other. Upon arrival, these test packets are dequeued and signal an interrupt to request service of the test packet queue. The test packets are then read out of the queues and analyzed by software operating on the FIC 210 or on the SAC 220, as the case may be. If the content in the test packet is properly encoded, then the HISL 216, 218 is declared to be synchronized. Otherwise, auto recovery will engage to try to re-synchronize the link (i.e. the process 400 will return to step F0).

Upon execution of step F5, or in the event of an error or a reset instruction during execution of step F5, the process 400 proceeds to decision block 413. Block 413 will return the process 400 to step F0 if there is an error or a reset instruction. Otherwise, process 400 will proceed to step F6.

### Step F6: HISL is "In Service"

In step F6, shown at block 414, the data flow for the FIC 210 is enabled. Once the test packets exchanged in step F5 are determined to be valid, the HISLs 216, 218 are put into service by allowing data flow across. Upon execution of step F6, the FIC-side link synchronization process 400 is complete and data can flow between the FIC 210 and the SAC 220. If an error or a reset is detected at block 415 during normal operation and transmission of data flow between the FIC 210 and the SAC 220, then process 400 will return to step F0. The link synchronization process will then restart from block 402, as discussed above.

Now referring to Fig. 5, the SAC 220 executes a corresponding SAC-side link synchronization process 500. While idle packets and test packets are exchanged between the SAC-side process 500 and the FIC-side process 400, the processes are essentially independent and may operate by sensing the status of their respective devices.

### S0: Initial Device and Port State

Step S0, shown at block 502, is that starting point of the link synchronization process on the SAC 220. If the SAC 220 is reset, or if an error is detected during normal operation, step S0 may also be the restarting point for link synchronization. Upon entering step S0, the process 500 proceeds to step S1 to begin the synchronization process.

### S1: Device Initialization and Port Enable

In step S1, shown at block 504, devices in the SAC 220 are reset and initialized with default register values. The HISL 216, 218 between the SAC 220 and the FIC 210 is effectively shutdown as the laser devices in the SAC 220 are turned off and reset. The initialization in step S1 removes the SAC 220 devices from reset, initializes encoding/decoding tables, enables the SerDes 306a - 306c, enables the dataslices 308, programs the 8B/10B tables in the dataslices 308, puts the port processor into non-operation mode and disables the optical Tx 224 and optical Rx 222. However, the optical Rx 222 is able to detect signals in the disabled mode. Initialization also "latches" the SerDes 306a -306c, analogously to the SerDes 302a - 302c as discussed above for step F1.

Upon execution of step S1, or in the event of an error or a reset instruction during operation of step S1, process 500 proceeds to decision block 505. If there are any errors or reset instructions, block 505 returns process 500 to step S0. Otherwise, process 500 proceeds to step S2.

### S2: Rx (Receive) Optics Enable

In step S2, shown at block 506, the Rx receiver in the SAC 220 is enabled and the Rx optical device is tested to determine whether it can detect a laser signal from the FIC 210. Upon execution of step S2, or in the event of an error or reset instruction during execution of step S2, process 500 proceeds to decision block 507. If there are any errors or reset instructions, process 500 returns to step S0. Otherwise, process 500 proceeds to step S3.

### S3: Alignment and Idle Packets

In step S3, shown at block 508, data-slices 308 (Fig. 4) are checked to determine if they can detect the idle packets received from the FIC 210. If the idle packets can be detected, then the dataslices 308 are reset to flush any queues that may contain corrupted cells. Next the dataslices 308 are checked again to determine if they can detect idle packets. This is necessary when the dataslices 308 (e.g. PMC Sierra Part No. PM9313-HC) do not support a queue flush function. The only way to flush the queues on the dataslices 308 is to power them off and back on again (i.e. a device reset). The first dataslice test is to ensure that the dataslices 308 can see any idle packets at all. Then the dataslices 308 are reset to attempt to align all twelve dataslices 308 to flush the queues of any corrupted cells received beforehand. After a reset is completed, it is necessary to retest the queues to ensure that the incoming idle packets are properly aligned and not skewed across all twelve slices 308.

To prevent cells from being sent through the HISL 216, 218 before it is synchronized, internal switch core links and the port processor 310 arc enabled only after link alignment. During HISL 216, 218 synchronization, it is undesirable to allow cells to flow into the switching core 228. Likewise, the port processor 310 on the SAC 220 can only be enabled when both HISL ports 216, 218 that are being synchronized are sending idle packets in both directions. This prevents the port processor 310 from communicating with the switch core scheduler 232 during HISL 216, 218 initialization.

Upon execution of step S3, or in the event of an error or reset instruction during execution of step S3, process 500 proceeds to decision block 509. At block 509, if there are any errors or reset instructions, the process 500 returns to step S0. Otherwise, the method proceeds to step S4.

### S4: Tx Optical Enable

In step S4, shown at block 510, the Tx optical device in the SAC 220 is activated, and in response to detection of idle packets from the FIC 210 in step S3, return idle packets are sent to the FIC 210. Upon execution of step S4, or in the event of an error or reset instruction during execution of step S4, process 500 proceeds to decision block 511. At block 511, if there are any errors or reset instructions, process 500 will return to step S0. Otherwise, the method will proceed to step S5.

### S5: Enable Switch Core Links and Port Processor

In step S5, shown at block 512, return idle packets are sent to the FIC 210 once the FIC 210 is properly "aligned" to the SAC 220 idle packets. (Alignment is achieved, for example, when twelve independent streams of bits find the start of a six byte sequence (idle packet) within the same clock cycle. If any one of the twelve streams fails to find idle packets or fails to achieve it in the same clock cycle, then the dataslices 308 are said to be skewed. This would require a restart at step S0.) The SAC 220 is adapted to detect this alignment and, upon its occurrence, the SAC 220 will enable the switching core links for data flow. The SAC 220 is also able to detect a change in idle packets coming from the FIC 210. There are two kinds of idle packets: The FIC 210 will initially send a first kind of idle packet that indicates that it is not receiving idle packets on its Rx device 214. And second kind of idle packet indicates that the FIC 210 is properly receiving idle packets on its Rx device 214. In this way the SAC 220 can determine if the FIC 210 is receiving idle packets that are transmitted from the SAC 220.

Thereafter, the idle packet counter is programmed to a lower insertion rate and an SAC port processor is enabled to allow the data flow. The port processor then will be able to communicate with a scheduler to allow cells queued in the dataslices 308 to enter the switching core. Upon completion of step S5, or in the event of an error or reset instruction during execution of step S5, process 500 proceeds to decision block 513. If there are any errors or reset instructions, process 500 will return to step S0. Otherwise, the method will proceed to step S6.

### S6: Test Packet Exchange for HISL Verification

At step S6, shown at block 514, the SAC 218 is ready to receive and transmit test packets. These packets are written into the Port Processor 310 by software and queued into the data stream. The port processor 310 will indicate that it received a test packet which is read out of its queue and analyzed by software to ensure the packet is valid. Upon execution of step S6, or in the event of an error or reset instruction during execution of step S6, process 500 proceeds to decision block 515. If there are any errors or reset instructions, process 500 will return to step S0. Otherwise, the method will proceed to step S7.

### S7: HISL is "In Service"

At step S7, shown at block 516, the HISL 216, 218 is put into service by allowing data flow across the HISL link. Upon execution of step S7, the link synchronization process is complete. During normal operation, if there are any errors or reset instructions, the process 500 will return to step S0. Upon such an occurrence, the FIC 210 and SAC 220 will begin to put all devices into reset and restart the link synchronization process at step S0 as explained above.

It is noted that those skilled in the art will appreciate that various modifications of detail may be made to the present embodiment, all of which would come within the scope of the invention. Specifically, any modification of the order of steps taken in process 400 or in process 500 which does not substantially affect the link synchronization process is contemplated to be within the scope of the present invention. For example, step F3 (Rx Optical Enable) may be executed concurrently with step F2 rather than consecutively. Similarly, the number of steps in each of process 400 and process 500 is not necessarily limiting, as one or more steps may be combined and viewed to be in the same step, or one of the steps described above may be parsed into a plurality of steps.

## Claims

1. A method of synchronizing unframed data flow through parallel optical links (216, 218) between first (210) and second (220) communications components, each said first (210) and second (220) communications components including an optical laser (212, 224) for transmitting laser signals to the other through said optical links (216, 218), and each said first (210) and second (220) communications components including optical sensors (214, 222) for receiving said transmitted laser signals, comprising the steps of;
(a) initializing each of said first (210) and second (220) communications components;
(b) enabling said optical lasers (212, 224) and optical sensors (214, 222) and exchanging idle packets between said first (210) and second (220) communications components to establish a datapath across said optical links (216, 218);
(c) exchanging test data packets across said datapath established in step (b) to verify connection of all of said optical links (216, 218); and
(d) upon verification of connection of said optical links (216, 218) in step (c), enabling data flow between said first (210) and second (220) communications components;
whereby, said optical links (216,218) are synchronized, said datapath is established, and said test data transmission is verified before said data flow is allowed between said first (210) and second (220) communications components.

2. The method according to claim 1, wherein, step (a) comprises:
(i) flushing FIFO performed by a device reset and input queues of said first (210) and second (220) communications components;
(ii) enable said optical lasers (212, 224) and said optical sensors (214,222); and
(iii) latching serial-deserializer circuits operatively connected to said optical links (216, 218).

3. The method according to any one of claims 1 or 2, wherein, step (b) comprises:
(iv) enabling said optical laser (212) in said first communications device (210) and transmitting laser signals comprising idle packets to said second communications device (220);
(v) enabling said optical sensor (214) in said first communications device (210);
(vi) enabling said optical sensor (222) in said second communications device (220);
(vii) detecting idle packets in said second communications device (220);
(viii) flushing any queues in said second communications device (220) and detecting said idle packets received from said first communications device (210);
(ix) upon detection of said idle packets from said first communications device (210) in step (vii), enabling said optical laser (224) in said second communications device (220) and transmitting laser signals comprising return idle packets to said first communications device (210); and
(x) detecting said return idle packets from said second communications device (220) using said optical sensor (214) in said fi rst comm unications device (210).

4. The method according to any one of claims 1 to 3, wherein, step (c) comprises:
(xi) generating test data packets in said first communications device (210) and transmitting said test data packets across said datapath to said second communications device (220);
(xii) receiving and enqueuing said test data packets in said second communications device (220);
(xiii) testing said dequeued test data packets to verify that they are properly encoded;
(xiv) upon receiving properly encoded test data packets from said first communications device (210) in step (xiii), generating return test data packets and transmitting said return test data packets across said datapath to said first communications device (210); and
(xv) receiving and enqueuing said return test data packets generated in step (xiii) in said first communications device (210);
(xvi) testing said dequeued return test data packets to verify that they are properly encoded; and
(xvii) upon receiving properly encoded return test data packets, verifying the connection of said optical links (216, 218).

5. The method according to any one of claims 1 to 4, further comprising before step a) the steps of:
(u) detecting an occurrence of a communications error between said first (210) and second (220) communications components;
(v) upon detection of said communications error in step (u) proceed through steps (a) to (d).

6. The method according to any one of claims 1 to 5, where the first communications component is a fabric interface card (210) and the second communications component is a switch access card (220).

## Patentansprüche

1. Verfahren zum Synchronisieren eines rahmenfreien Datenstroms über parallele optische Verbindungen (216, 218) zwischen ersten (210) und zweiten (220) Kommunikationskomponenten, wobei jede erste (210) und zweite (220) Kommunikationskomponente einen optischen Laser (212, 224) zum Übertragen von Lasersignalen über die optischen Verbindungen (216, 218) beinhaltet und jede erste (210) und zweite (220) Kommunikationskomponente optische Sensoren (214, 222) zum Empfangen der übertragenen Lasersignale beinhaltet, das die Schritte umfasst:
(a) initialisieren jeder der ersten (210) und zweiten (220) Kommunikationskomponenten;
(b) Aktivieren der optischen Laser (212, 224) und optischen Sensoren (214, 222) und Austauschen von Frei-Paketen zwischen den ersten (210) und zweiten (220) Kommunikationspaketen, um einen Datenweg über die optischen Verbindungen (216, 218) aufzubauen;
(c) Austauschen von Prüfdatenpaketen über den in Schritt (b) aufgebauten Datenweg, um den Anschluss aller optischen Verbindungen (216, 218) zu verifizieren; und
(d) bei Verifikation des Anschlusses der optischen verbindungen (216, 218) in Schritt (c) Ermöglichen des Datenstroms zwischen den ersten (210) und zweiten (220) Kommunikationskomponenten;
wodurch die optischen Verbindungen (216, 218) synchronisiert werden, der Datenweg aufgebaut wird und die Prüfdatenübertragung verifiziert wird, bevor der Datenstrom zwischen den ersten (210) und zweiten (220) Kommunikationskomponenten gestattet wird.

2. Verfahren nach Anspruch 1, bei dem Schritt (a) umfasst:
(i) Löschen des FIFO, das durch ein Zurücksetzen der Einrichtung ausgeführt wird, und Eingeben von warteschlangen der ersten (210) und zweiten (220) Kommunikationskomponenten;
(ii) Aktivieren der optischen Laser (212, 224) der optischen Sensoren (214, 222); und
(iii)Sperren von Serien-Parallel-Umsetzerschaltungen, die an die optischen Verbindungen (216, 218) wirksam angeschlossen sind.

3. Verfahren nach einem der Ansprüche 1 oder 2, bei dem Schritt (b) umfasst:
(iv) Aktivieren des optischen Lasers (212) in der ersten Kommunikationseinrichtung (210) und Übertragen von Frei-Pakete umfassenden Lasersignalen zur zweiten Kommunikationseinrichtung (220);
(v) Aktivieren des optischen Sensors (214) in der ersten Kommunikationseinrichtung (210);
(vi) Aktivieren des optischen Sensors (220) in der zweiten Kommunikationseinrichtung (220);
(vii) Erfassen von Frei-Paketen in der zweiten Kommunikationseinrichtung (220);
(viii) Löschen jeglicher Warteschlangen in der zweiten Kommunikationseinrichtung (220) und erfassen von Frei-Paketen, die von der ersten Kommunikationseinrichtung (210) her empfangen werden;
(ix) bei Erfassen der Frei-Pakete von der ersten Kommunikationseinrichtung (210) her in Schritt (vii) Aktivieren des optischen Lasers (224) in der zweiten Kommunikationseinrichtung (220) und Übertragen von Lasersignalen, die Antwort-Frei-Pakete umfassen, zur ersten Kommunikationseinrichtung (210); und
(x) Erfassen der Antwort-Frei-Pakete von der zweiten Kommunikationseinrichtung (220) her unter Verwendung des optischen Sensors (214) in der ersten Kommunikationseinrichtung.

4. Verfahren nach einem der Ansprüche 1 bis 3, bei dem Schritt (c) umfasst:
(xi) Erzeugen von prüfdatenpaketen in der ersten Kommunikationseinrichtung (210) und Übertragen der Prüfdatenpakete über den Datenweg zur zweiten Kommunikationseinrichtung (220);
(xii)Empfangen und Einreihen der Prüfdatenpakete in eine Warteschlange in der zweiten Kommunikationseinrichtung (220);
(xiii) Prüfen der aus der Warteschlange entnommenen Dacenpakete, um zu verifizieren, dass sie richtig codiert sind;
(xiv)bei Empfangen von richtig codierten Prüfdatenpaketen von der ersten Kommunikationseinrichtung (210) her in Schritt (xiii) Erzeugen von Antwort-Prüfdatenpaketen und Übertragen der Antwort-Prüfdatenpakete über den Datenweg zur ersten Kommunikationseinrichtung (210); und
(xv) Empfangen und Einreihen der in Schritt (xiii) erzeugten Antwort-Prüfdatenpakete in eine Warteschlange in der ersten Kommunikationseinrichtung (210);
(xvi)Prüfen der aus der Warteschlange entnommenen Antwort-Prüfdatenpakete, um zu verifizieren, dass sie richtig codiert sind; und
(xvii) bei Empfangen von richtig codierten Antwort-Prüfdatenpaketen Verifizieren des Anschlusses der optischen Verbindungen (216, 218).

5. Verfahren nach einem der Ansprüche 1 bis 4, das vor Schritt a) die Schritte umfasst:
(u) Erfassen eines Auftretens eines Kommunikationsfehlers zwischen den ersten (210) und zweiten (220) Kommunikationskomponenten;
(v) bei Erfassung des Kommunikationsfehlers in Schritt (u) weitergehen über Schritte (a) bis (d)

6. Verfahren nach einem der Ansprüche 1 bis 5, bei dem die erste Kommunikationskomponente eine Szrukturschnittstellenkarze (210) und die zweite Kommunikationskomponente eine Umschalter-Zugangskarte (220) ist.

## Revendications

1. Procédé de synchronisation d'un flot de données non tramées à travers des liaisons par fibre optique parallèles (216, 218) entre un premier (210) et un second (220) composant de communication, chacun parmi ledit premier (210) et ledit second (220) composant de communication comportant un laser optique (212, 224) pour transmettre des signaux laser à l'autre laser optique par l'intermédiaire desdites liaisons par fibre optique (216, 218), et chacun desdits premier (210) et second (220) composants de communication comportant des capteurs optiques (214,222) pour recevoir lesdits signaux laser transmis, comportant les étapes consistant à ;
(a) initialiser chacun desdits premier (210) et second (220) composants de communication ;
(b) activer lesdits lasers optiques (212, 224) et capteurs optiques (214, 222) et échanger des paquets au repos entre lesdits premier (210) second (220) composants de communication pour établir un chemin de données à travers lesdites liaisons par fibre optique (216, 218) ;
(c) échanger des paquets de données de test à travers ledit chemin de données établi à l'étape (b) pour vérifier la connexion de toutes lesdites liaisons par fibre optique (216, 218) ; et
(d) postérieurement à la vérification de la connexion desdites liaisons par fibre optique (216, 218) à l'étape (c), activer un flot de données entre lesdits premier (210) et second (220) composants de communication ; moyennant quoi, lesdites liaisons par fibre optique (216, 218) sont synchronisées, ledit chemin de données est établi, et ladite transmission de données de test est vérifiée avant que ledit flot de données ne soit autorisé entre lesdits premier (210) et second (220) composants de communication.

2. Procédé selon la revendication 1, dans lequel, l'étape (a) comporte les étapes consistant à :
(i) Purger le mode de traitement premier entré, premier sorti (FIFO) exécuté par une réinitialisation de dispositif et des files d'attente d'entrée desdits premier (210) et second (220) composants de communication ;
(ii) activer lesdits lasers optiques (212, 224) et lesdits capteurs optiques (214, 222) ; et
(iii) verrouiller des circuits de sérialiseurs - désérialiseurs connectés de façon fonctionnelle auxdites liaisons optiques (216, 218).

3. Procédé selon l'une quelconque des revendications 1 ou 2, dans lequel, l'étape (b) comporte les étapes consistant à :
(iv) activer ledit laser optique (212) dans ledit premier dispositif de communication (210) et transmettre des signaux laser comportant des paquets au repos audit deuxième dispositif de communication (220) ;
(v) activer ledit capteur optique (214) dans ledit premier dispositif de communication (210) ;
(vi) activer ledit capteur optique (222) dans ledit deuxième dispositif de communication (220) ;
(vii) détecter des paquets au repos dans ledit deuxième dispositif de communication (220) ;
(viii) purger toutes les files d'attente dans ledit deuxième dispositif de communication (220) et détecter lesdits paquets au repos reçus à partir dudit premier dispositif de communication (210) ;
(ix) postérieurement à la détection desdits paquets au repos dudit premier dispositif de communication (210) à l'étape (vii), activer ledit laser optique (224) dans ledit deuxième dispositif de communication (220) et transmettre des signaux laser comportant des paquets au repos de retour audit premier dispositif de communication (210) ; et
(x) détecter des paquets au repos de retour à partir dudit deuxième dispositif de communication (220) au moyen dudit capteur optique (214) dans ledit premier dispositif de communication (210).

4. Procédé selon l'une quelconque des revendications 1 à 3, dans lequel, l'étape (c) comporte les étapes consistant à :
(xi) générer des paquets de données de test dans ledit premier dispositif de communication (210) et transmettre lesdits paquets de données de test à travers ledit chemin de données audit deuxième dispositif de communication (220) ;
(xii) recevoir et mettre en file d'attente lesdits paquets de données de test dans ledit deuxième dispositif de communication (220) ;
(xiii) tester lesdits paquets de données de test retirés de la file d'attente pour vérifier qu'ils sont correctement codés ;
(xiv) postérieurement à la réception de paquets de données correctement codés dudit premier dispositif de communication (210) à l'étape (xiii), générer des paquets de données de test de retour et transmettre lesdits paquets de données de test de retour à travers ledit chemin de données audit premier dispositif de communication (210) ; et
(xv) recevoir et mettre en file d'attente lesdits paquets de données de test de retour générés à l'étape (xiii) dans ledit premier dispositif de communication (210) ;
(xvi) tester lesdits paquets de données de test de retour retirés de la file d'attente pour vérifier qu'ils sont correctement codés ; et
(xvii) postérieurement à la réception de paquets de données de test correctement codés, vérifier la connexion desdites liaisons par fibre optique (216, 218).

5. Procédé selon l'une quelconque des revendications 1 à 4, comportant en outre préalablement à l'étape a) les étapes consistant à :
(u) détecter une occurrence d'une erreur de communication entre lesdits premier (210) et second (220) composants de communication ;
(v) postérieurement à la détection de ladite erreur de communication à l'étape (u), passer aux étapes (a) à (d).

6. Procédé selon l'une quelconque des revendications 1 à 5, dans lequel le premier composant de communication est une carte d'interface réseau de matrice (210) et le deuxième composant de communication est une carte d'accès de commutation (220).
